(19)

Europäisches Patentamt
European Patent Office
Office européen des brevets

(11)  **EP 4 617 108 A1**

(12)  **EUROPEAN PATENT APPLICATION**
published in accordance with Art. 153(4) EPC

(43) Date of publication:
**17.09.2025  Bulletin 2025/38**

(21) Application number: **22965005.6**

(22) Date of filing: **30.12.2022**

(51) International Patent Classification (IPC):
**B60L 53/31** (2019.01)      **B60L 53/302** (2019.01)
**F04D 29/66** (2006.01)      **E04B 1/82** (2006.01)

(52) Cooperative Patent Classification (CPC):
**B60L 53/302; B60L 53/31; E04B 1/82; F04D 29/66;**
Y02T 10/70; Y02T 10/7072; Y02T 90/12

(86) International application number:
**PCT/CN2022/144045**

(87) International publication number:
**WO 2024/098541 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2022  CN 202211391928**

(71) Applicant: Sungrow Power Supply Co., Ltd.
**Hefei, Anhui 230088 (CN)**

(72) Inventors:
• YAO, Qi
  **Hefei, Anhui 230088 (CN)**
• ZHOU, Shiwen
  **Hefei, Anhui 230088 (CN)**
• YANG, Hang
  **Hefei, Anhui 230088 (CN)**
• ZHOU, Jie
  **Hefei, Anhui 230088 (CN)**

(74) Representative: **Biallo, Dario et al**
**Barzanò & Zanardo S.p.A.**
**Via Borgonuovo, 10**
**20121 Milano (IT)**

(54)  **SILENCING AIR DUCT DEVICE AND CHARGING PILE**

(57)      Disclosed in the present application are a silencing air duct device and a charging pile. The silencing air duct device is separately provided with a silencing air duct and a micro-perforated cavity; two ends of the silencing air duct are open, one end being used for leading to external air, and the other end being used for being communicated with an air inlet or air outlet of a device to be silenced; the micro-perforated cavity is provided in a gas flow path of the silencing air duct, and, by means of communication holes formed in the micro-perforated cavity, is communicated with the silencing air duct. During use, the silencing air duct device is installed on the device to be silenced, so that gas to be silenced generated by the device to be silenced can enter the inside of the silencing air duct of the silencing air duct device for noise reduction; and additionally, because the gas flow path of the silencing air duct is communicated with the micro-perforated cavity, the gas can enter the micro-perforated cavity for further noise reduction, thereby reducing the noise of the device to be silenced.

FIG. 3

EP 4 617 108 A1

## Description

The present application claims the priority to Chinese Patent Application No. 202211391928.8, titled "SILENCING AIR DUCT DEVICE AND CHARGING PILE", filed with the China National Intellectual Property Administration on November 8, 2022, the entire content of which is incorporated herein by reference.

## FIELD

The present application relates to the technical field of charging piles, and in particular to a silencing air duct device and a charging pile.

## BACKGROUND

A charging pile is a common charging device used for charging a new energy vehicle. In order to meet the heat dissipation requirement for the operation of the charging pile, an axial flow fan is used to perform forced air-cooling type heat dissipation on the charging module in the charging pile. The axial flow fan is installed inside the charging pile, and there are grid holes provided in a side door panel of the charging pile. Under the action of the axial flow fan, external air enters from the grid holes of the side door panel. Operation of the axial fan can generate noise, which can radiate outward through the grid holes in the side door panel.

With the continuous development of new energy vehicles, more and more noise-generating devices, such as charging piles for charging new energy vehicles, need to be silenced. These noise-generating devices are often found in the vicinity of the living areas and have an impact on nearby residents.

In summary, how to reduce the noise generated by the operation of a device to be silenced is an urgent problem to be solved by those skilled in the art.

## SUMMARY

In view of this, a first object of the present application is to provide a silencing air duct device, so as to reduce noise of a device to be silenced.

A second object of the present application is to provide a charging pile.

In order to achieve the first objective, the present application provides the following solutions.

A silencing air duct device is used for noise reduction of an apparatus to be silenced, and the silencing air duct device is separately provided with a silencing air duct and a micro-perforated cavity;

two ends of the silencing air duct are open, and, one end of the silencing air duct is used for communicating with external air, and the other end of the silencing air duct is used for communicating with an air inlet or air outlet of the apparatus to be silenced;

the micro-perforated cavity is provided in a gas flow path of the silencing air duct, and is communicated with the silencing air duct by means of a communication hole provided in the micro-perforated cavity.

In a specific embodiment, there is at least one micro-perforated cavity, which is located in the silencing air duct so as to separate the silencing air duct into at least two sections with different cross-sections.

In another specific embodiment, the silencing air duct device includes a clamping plate assembly and side plates; the clamping plate assembly at least includes two clamping plates, and adjacent clamping plates are spaced apart by a preset distance, and the side plates seal and fix two sides of the clamping plate assembly respectively, so as to cooperate with the clamping plates for forming the at least one of the silencing air ducts.

In another specific embodiment, at least one micro-perforated cavity is provided on a surface of at least one of the adjacent clamping plates facing the opposite clamping plate, so as to separate the silencing air duct into at least two sections with different cross-sections;

when two or more micro-perforated cavities are provided, the micro-perforated structures are spaced apart along a gas flow direction in the silencing air duct.

In another specific embodiment, at least one micro-perforated cavity is alternately provided and spaced apart on the surface of each of the two adjacent clamping plates facing the opposite clamping plate;

a first air duct of the silencing air duct is formed between the adjacent micro-perforated cavities, and a second air duct of the silencing air duct is formed between the micro-perforated cavity and the opposite clamping plate, the first air duct is communicated with the second air duct, and the first air duct has a cross-section different from that of the second air duct so as to form an expansion cavity air duct;

the communication hole passes through a side wall of the micro-perforated cavity forming the first air duct, alternatively, the communication hole passes through a side wall of the micro-perforated cavity forming the second air duct.

In another specific embodiment, the micro-perforated cavity is adjustably installed on the clamping plate in a direction from an inlet to an outlet of the silencing air duct.

In another specific embodiment, one of the micro-perforated cavity and the clamping plate is provided with a sliding rail, and the other of the micro-perforated cavity and the clamping plate is provided with a sliding groove which is in sliding fit with the sliding rail.

Alternatively, at least one of the micro-perforated cavity and the clamping plate defines an elongated hole or multiple connecting holes spaced apart from each other so as to be adjustably connected to the other of the micro-perforated cavity and the clamping plate by means of a fastener.

In another specific embodiment, the clamping plate can move in a direction close to or away from the adjacent clamping plate so as to be adjustably connected to the side plate.

In another specific embodiment, one of the clamping plate and the side plate is provided with a guide rail, and the other of the clamping plate and the side plate is provided with a guide groove for the guide rail to slidably move; alternatively, at least one of the clamping plate and the side plate is provided with an elongated hole or multiple connecting holes spaced apart from each other, so as to adjust the relative position of the clamping plate and the side plate.

In another specific embodiment, multiple communication holes are provided on the micro-perforated cavity; the silencing air duct device further includes a plug, which detachably seals the communication hole.

In another specific embodiment, at least two plugs are provided, and adjacent plugs are connected to each other by means of a connecting strip.

In another specific embodiment, the silencing air duct device further includes a sound-absorbing material layer laid on an inner wall of the silencing air duct and an inner wall of the micro-perforated cavity.

In another specific embodiment, a preset height difference is present between the two ends of the silencing air duct;

when the silencing air duct device is installed at the air inlet of the apparatus to be silenced, the inlet of the silencing air duct is lower in height than the outlet of the silencing air duct.

when the silencing air duct is installed at the air outlet of the apparatus to be silenced, the outlet of the silencing air duct is lower in height than the inlet of the silencing air duct.

In another specific embodiment, two ends of the micro-perforated cavity are open and are sealed by the side plates;

and/or

the clamping plate is provided with a first flanging connected to the side plate;
and/or

the side plate is provided with a second flanging, which is connected to the apparatus to be silenced.

Various embodiments according to the present application may be arbitrarily combined as required, and the embodiments obtained by these combinations are also within the scope of the present application, which are a part of the specific embodiments of the present application.

According to the silencing air duct device provided in the present application, a charging pile is an example of the apparatus to be silenced. When in use, the silencing air duct device is installed on the charging pile, so that gas to be silenced generated by the apparatus to be silenced can enter into the silencing air duct of the silencing air duct device for noise reduction; and additionally, because the gas flow path of the silencing air duct is communicated with the micro-perforated cavity, the gas can enter the micro-perforated cavity for further noise reduction, thereby reducing the noise of the apparatus to be silenced.

In order to achieve the second object, the present application provides the following solutions.

A charging pile includes a charging pile body and the silencing air duct device according to any one of the above embodiments;

at least one of an air inlet and an air outlet of the charging pile body is provided with the silencing air duct device;

since the charging pile according to the present application includes the silencing air duct device described in any one of the above embodiments, all of the beneficial effects of the silencing air duct device are included in that of the charging pile disclosed in the present application.

BRIEF DESCRIPTION OF THE DRAWINGS

In order to more clearly illustrate the technical solutions in the specific embodiments of the present application or in prior art, the accompanying drawings used in the description of the specific embodiments or the prior art will be briefly described below. And it is apparent that the accompanying drawings in the following description are only some of the embodiments of the present application, and other accompanying drawings can be obtained by those skilled in the art based on these accompanying drawings without creative efforts.

FIG. 1 is a schematic perspective structural view of a silencing air duct device according to the present application;

FIG. 2 is a schematic exploded structural view of the silencing air duct device according to the present application;

FIG. 3 is a schematic cross-sectional structural view of the silencing air duct device according to the present application;

FIG. 4 is a schematic cross-sectional structural view of a micro-perforated cavity according to the present application;

FIG. 5 is a partial perspective structural schematic view when plugs are installed at communication holes of the micro-perforated cavity according to the present application;

FIG. 6 is a schematic perspective structural view when a plug and a connecting strip are connected together according to the present application;

FIG. 7 is a schematic perspective structural view when a clamping plate and a micro-perforated cavity are assembled together according to an embodiment of the present application;

FIG. 8 is a schematic perspective structural view when a clamping plate and a micro-perforated cavity are assembled together according to another embodiment of the present application;

FIG. 9 is a partial cross-sectional structural view of a silencing air duct device according to the present application;

FIG. 10 is a schematic perspective structural view of a micro-perforated cavity according to the present application;

FIG. 11 is a schematic perspective structural view of a clamping plate according to the present application;

FIG. 12 is a partial schematic perspective structural view when the micro-perforated cavity is slidably connected to the clamping plate according to the present application;

FIG. 13 is a partial schematic perspective structural view when a sound-absorbing material layer is installed in the silencing air duct device according to the present application;

FIG. 14 is a schematic exploded structural view when the silencing air duct device is connected to a side door according to an embodiment of the present application;

FIG. 15 is a schematic cross-sectional structural view when a fan module and the silencing air duct device are assembled together according to the present application.

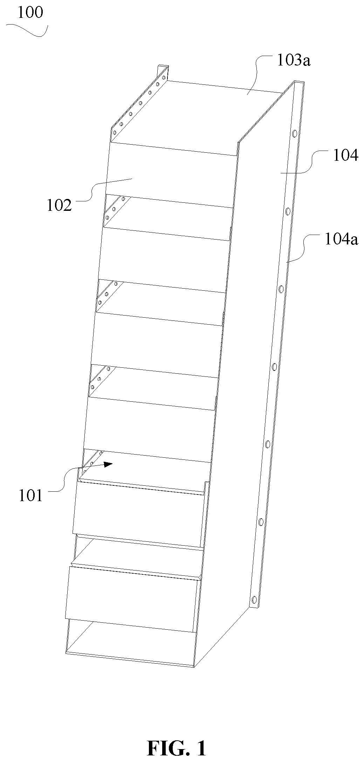

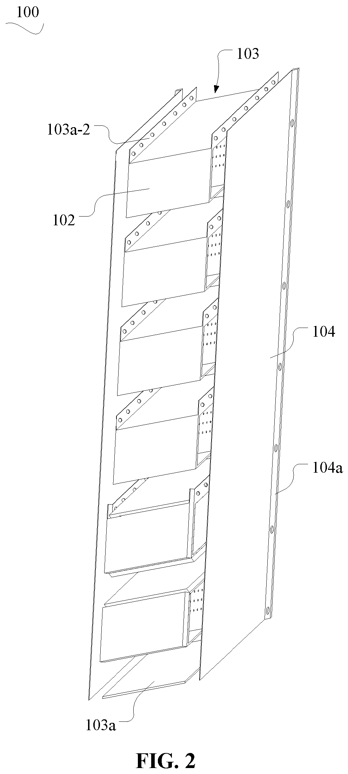

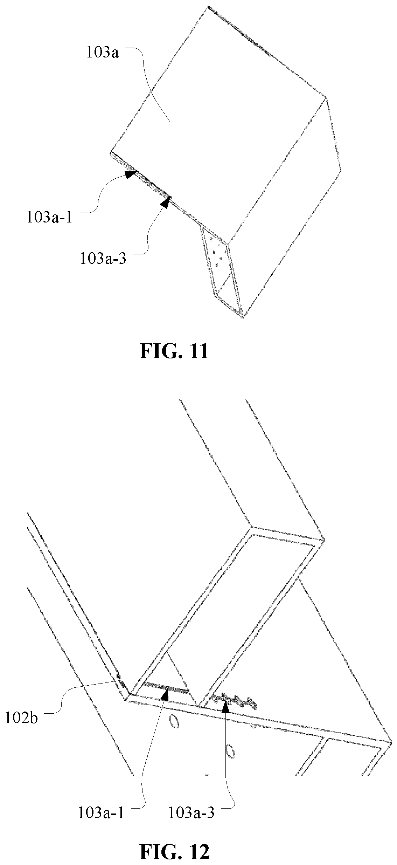

Reference numerals are explained as follows in FIG. 1 to FIG. 15:

| 101. | silencing air duct; | 100. | silencing air duct device; |
|------|---------------------|------|---------------------------|
| 102. | micro-perforated cavity; | 102a. | communication hole; |
| 103a. | clamping plate; | 103. | clamping plate assembly; |
| 104. | side plate; | 101a. | first air duct; |
| 101b. | second air duct; | 102b. | sliding rail; |
| 103a-1. | sliding groove; | 103a-3. | limiting hole; |

(continued)

| 105. | plug; | 106. | connecting strip; |
|---|---|---|---|
| 107. | sound-absorbing material layer; | 104a. | second flanging; |
| 103a-2. | first flanging; | 200. | fan module; |
| 300. | side door. | | |

## DETAILED DESCRIPTION OF THE EMBODIMENTS

The technical solutions according to the embodiments of the present application are described clearly and comprehensively below with reference to FIG. 1 to FIG. 15. Apparently, the described embodiments are only some rather than all of the embodiments of the present application. Based on the embodiments of the present application, all other embodiments obtained by those skilled in the art without any creative work will fall into the protection scope of the present application.

In the description of the present application, it should be noted that the orientation or positional relationships indicated by terms such as "upper", "lower", "top", "bottom" and the like are based on the orientation or positional relationships shown in the accompanying drawings, and are merely for the convenience of describing the present disclosure and simplifying the description, rather than indicating or implying that a device or element referred to must have a particular orientation, or be configured and operated in a particular orientation, therefore the above terms should not be construed as a limitation to the present application. In addition, the terms "first", "second" and the like are merely for descriptive purposes, and should not be construed as indicating or implying the relative importance.

With reference to FIG. 1 to FIG. 3, a silencing air duct device 100 is provided according to a first aspect of the present application, which is used to reduce noise of an apparatus to be silenced, and the apparatus to be silenced may be a fan module in a charging pile, or may be another apparatus that generates noise.

The silencing air duct device 100 is separately provided with a silencing air duct 101 and a micro-perforated cavity 102, and the number of the silencing air duct 101 and the number of the micro-perforated cavity 102 are not limited, which can be specifically set as required.

Two ends of the silencing air duct 101 are open, and one end of the silencing air duct 101 is used for communicating with external air, and the other end of the silencing air duct 101 is used for communicating with an air inlet or an air outlet of an apparatus to be silenced. It should be noted that the silencing air duct 101 may be any air duct that can realize noise reduction, and the specific shape and length thereof can be set based on the required installation space.

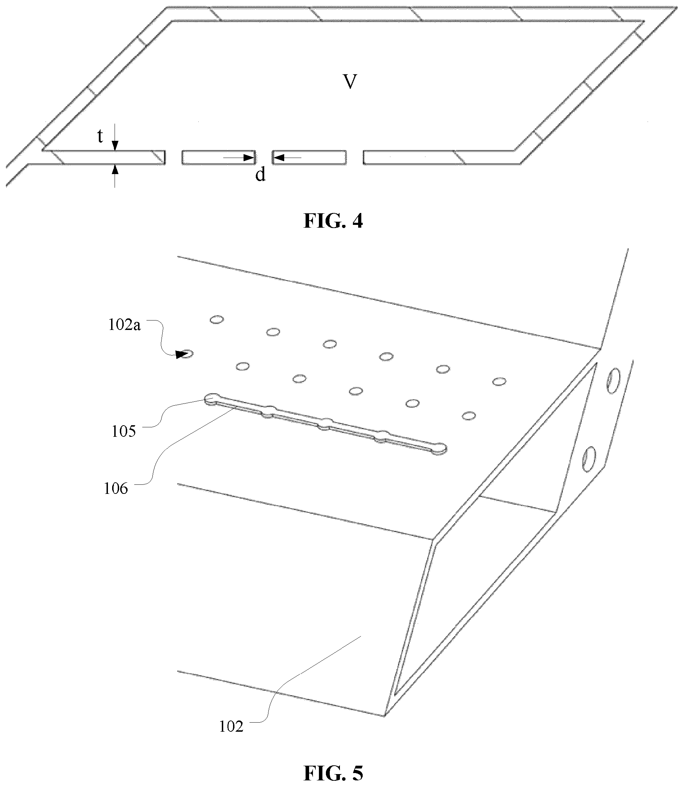

The micro-perforated cavity 102 is provided in a gas flow path of the silencing air duct 101, and is communicated with the silencing air duct 101 through a communication hole 102a provided in the micro-perforated cavity 102, and there is at least one communication hole 102a. As shown in FIG. 4, the diameter of the communication hole 102a is d, the number of the communication hole 102a is N, the volume of an inner cavity of the micro-perforated cavity 102 is V, and the wall thickness of the side wall of the micro-perforated cavity 102 provided with the communication hole 102a is t, the frequency of the noise to be reduced by the micro-perforated cavity 102 is calculated as follows:

$$\text{f} = \frac{c}{2\pi}\sqrt{\frac{G}{V}} \ ,$$

where $= N\frac{\pi d^2}{4(t+0.8d)}$ ,

in which, G is the conductivity, c is the sound velocity. The frequency of the noise to be reduced can be adjusted by the variation of the diameter of the communication hole 102a, the number of the communication holes 102a, the wall thickness of the side wall of the micro-perforated cavity 102 provided with the communication hole 102a, and the volume of the inner cavity of the micro-perforated cavity 102.

When there are multiple communication holes 102a, and it is necessary to adjust the number of the communication holes 102a so as to adjust the frequency of the noise to be reduced, according to the present application, the silencing air duct device 100 further includes a plug 105, as shown in FIG. 5, the plug 105 may detachably seal the communication hole 102a. It should be noted that the plug 105 may be an elastic plug made of a rubber material to facilitate assembly with the communication hole 102a and disassembly from communication hole 102a. Of course, the plug 105 may also be made of a rigid material, and is stuck into the communication hole 102a.

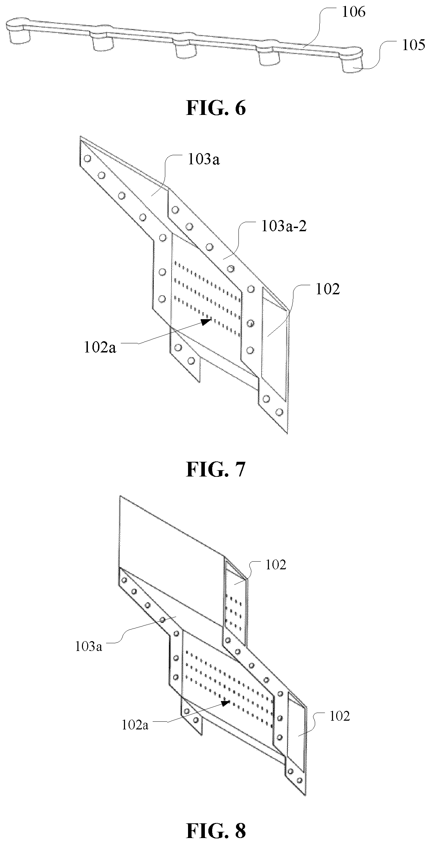

When there are at least two plugs 105, in order to improve the disassembling and assembling efficiency of the plug 105 and the communication hole 102a, according to the present application, the adjacent plugs 105 can be connected to each other by means of a connecting strip 106, as shown in FIG. 6.

The connecting strip 106 may be made of the same material as the plug 105 and integrally formed and connected to the plug 105; or the connecting strip 106 may be made of other materials, and/or the connecting strip 106 is detachably connected to the plug 105.

For the silencing air duct device 100 according to the present application, the silencing air duct 101 and the micro-perforated cavity 102 are provided to achieve noise reduction in two manners, thereby achieving noise reduction of the apparatus to be silenced.

In some embodiments, there is at least one micro-perforated cavity 102, which is located in the silencing air duct 101 to separate the silencing air duct 101 into at least two sections with different cross-sections, so as to form an expansion cavity air duct. That is to say, the micro-perforated cavity 102 is also used to change a portion of a cross-sectional area of the silencing air duct 101 in addition to having the function of noise reduction, so as to form the expansion cavity air duct, thereby avoiding a portion of the cross-section of the silencing air duct 101 from being changed by separately providing a protrusion in the silencing air duct 101, reducing the number of components, simplifying the structure and saving costs.

In some embodiments, the silencing air duct device 100 includes a clamping plate assembly 103 and side plates 104. The clamping plate assembly 103 at least includes two clamping plates 103a, and adjacent clamping plates 103a are spaced apart by a preset distance, and it should be noted that the preset distance can be specifically set based on the frequency band to be silenced.

The side plates 104 seal and fix to two sides of the clamping plate assembly 103 respectively. Specifically, each side plate 104 may be a single plate, which can be fixed to one side of all the clamping plates 103a. Of course, the side plate 104 may be connected to only two adjacent clamping plates 103a or three clamping plates 103a and so on. At least one silencing air duct 101 is formed by the side plates 104 and the clamping plates 103a. That is to say, when there are two clamping plates 103a, the side plates 104 and the two clamping plates 103a form one silencing air duct 101; the side plates 104 and three clamping plates 103a form two silencing air ducts 101, and so on. The number of the clamping plates 103a can be specifically set based on the specific structure of the apparatus to be silenced. When there are two or more silencing air ducts 101, the regeneration noise caused by air snatching between the air ducts of the apparatus to be silenced is avoided.

In some embodiments, at least one micro-perforated cavity 102 is provided on a surface of at least one of the adjacent clamping plates 103a facing the opposite clamping plate. That is to say, the micro-perforated cavity 102 may be only provided on a surface of one of the adjacent clamping plates 103a facing the opposite clamping plate 103a. Alternatively, two surfaces of the two clamping plates 103a facing each other may be provided with the micro-perforated cavity 102.

When two or more micro-perforated cavities 102 in one silencing air duct 101 are provided, the micro-perforated structures are spaced apart along a gas flow direction in the silencing air duct 101, so as to separate the silencing air duct 101 into at least two sections with different cross-sections. That is to say, the micro-perforated structures in the silencing air duct 101 provide the silencing air duct 101 to include at least two expansion cavity air ducts with different cross-sections, so as to avoid the separate arrangement of a protrusion on the clamping plate 103a to change the cross-section of the silencing air duct 101 to form the expansion cavity air duct, thereby saving materials, and improving the silencing effect. In addition, the expansion cavity air duct is suitable for low-intermediate-frequency silencing, and the micro-perforated cavity 102 is suitable for medium-high-frequency silencing, so that a wide range of silencing from low frequency to high frequency is realized.

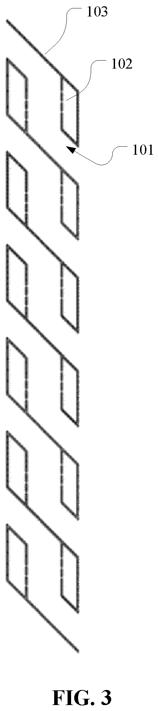

Further, the surfaces of the two adjacent clamping plates 103a facing the opposite clamping plate are respectively provided with at least one micro-perforated cavity 102, and the micro-perforated cavities 102 are alternately provided on the surfaces of the adjacent clamping plates 103a facing each other. For example, as shown in FIG. 3, the surfaces of the two adjacent clamping plates 103a facing the opposite clamping plate are respectively provided with one micro-perforated cavity 102, and the two micro-perforated cavities 102 are respectively located at different ends of the two clamping plates 103a. There are two types of the clamping plates 103a. One type is that clamping plates 103a are located at both ends of the clamping plate assembly 103, and only one side of the clamping plate 103a is provided with the micro-perforated cavity 102, as shown in FIG. 7. The other type is that the clamping plate 103a is located in the middle of the clamping plate assembly 103, and each side of the splint 103a is provided with the micro-perforated cavity 102, as shown in FIG. 8.

It should be noted that different micro-perforated cavities 102 in the same silencing air duct may be completely the same for reducing noise in the same frequency band, or may be provided to be different for reducing noise in different frequency bands. Similarly, the micro-perforated cavities 102 in different silencing air ducts may be provided to be the same for reducing noise in the same frequency band, or may be provided to be different for reducing noise in different frequency bands.

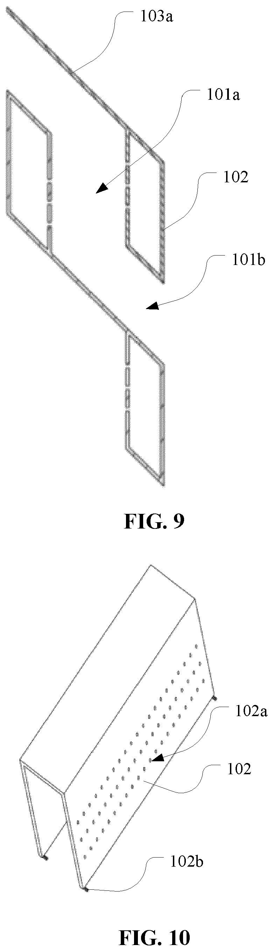

A first air duct 101a of the silencing air duct 101 is formed between adjacent micro-perforated cavities 102. Specifically, as shown in FIG. 9, a projection of the micro-perforated cavity 102 toward the adjacent micro-perforated cavity 102 is located on the micro-perforated cavity 102, so that the first air duct 101a is formed between side walls of the adjacent micro-perforated cavities 102.

A second air duct 101b of the silencing air duct 101 is formed between the micro-perforated cavity 102 and the opposite clamping plate 103a. The first air duct 101a is communicated with the second air duct 101b, and the first air duct 101a has a cross-section different from that of the second air duct 101b so as to form an expansion cavity air duct. Specifically, the cross-section of the first air duct 101a may be larger than that of the second air duct 101b; or alternatively, the cross-section of the second air duct 101b may be larger than that of the first air duct 101a. Taking the example that the cross-section of the first air duct 101a is larger than that of the second air duct 101b, as shown in FIG. 9, the first air duct 101a is not in a straight line with the second air ducts 101b communicated with the first air duct 101at two ends thereof, that is, the direction of air flow is changed, so that the noise is further reduced.

The communication hole 102a may pass through a side wall of the micro-perforated cavity 102 forming the first air duct 101a. Of course, the communication hole 102a may also passes through a side wall of the micro-perforated cavity 102 forming the second air duct 101b.

It should be noted that the number and diameter of the communication holes 102a in the different micro-perforated cavities 102, and the volume of the inner cavity of the micro-perforated cavity 102 may be same or different.

Further, according to the present application, two ends of the micro-perforated cavity 102 are open, and are sealed by the side plates 104. It can be understood that the micro-perforated cavity 102 are provided with micro-perforated structures at two ends thereof in a direction perpendicular to the side plate 104. It should be noted that the micro-perforated cavity 102 may also be provided as a closed cavity with two closed ends.

In some embodiments, the micro-perforated cavity 102 is adjustably installed on the clamping plate 103a in a direction from an inlet to an outlet of the silencing air duct 101, so that the distance between the micro-perforated cavities 102 is adjusted, which is adapt to noise reduction of the to-be-silenced gas in different frequency bands.

Due to the abrupt variation of the cross-sections of the first air duct 101a and the second air duct 101b, the impedance of the acoustic wave of the noise is not matched and a reflection occurs, so that the intensity of the noise is attenuated. The acoustic performance is the most important evaluation index of noise reduction, the transmission loss $L_{TL}$ is used as an important physical quantity for evaluating the noise reduction amount, and the transmission loss $L_{TL}$ for each frequency band is calculated by the following formula:

$$L_{TL} = \overline{L_{p_i}} - \overline{L_{p_t}} + (K_t - K_i) + 10 \lg \frac{S_i}{S_t}$$

in the above formula, $L_{pi}$ is an incident sound pressure level, in dB; $L_{pt}$ is a transmission sound pressure level, in dB; $K_i$ is a correction value of a background noise of an incident sound, in dB; $K_t$ is a correction value of a background noise of a transmitted sound, in dB; $S_i$ is a cross-sectional area upstream of a silencing channel, in $m^2$; and $S_t$ is a cross-sectional area downstream of the silencing channel, in $m^2$. In this embodiment, $S_t$ corresponds to the cross-section area of the second air duct 101b, $S_i$ corresponds to the cross-section area of the first air duct 101a, and it can be seen that the adjustment $S_t$ can be adjusted to achieve noise reduction of sounds in different frequency bands; or $S_i$ can be adjusted to achieve noise reduction of sounds in different frequency bands.

In order to adjust $S_t$, according to the present application, one of the micro-perforated cavity 102 and the clamping plate 103 is provided with a sliding rail 102b, and the other of the micro-perforated cavity 102 and the clamping plate 103 is provided with a sliding groove 103a-1, and the sliding rail 102b is in sliding fit with the sliding groove 103a-1, as shown in FIG. 10 to FIG. 12. In order to prevent the sliding rail 102b from detaching from the sliding groove 103a-1, according to the present application, the sliding rail 102b has a T-shaped cross-section, and the sliding groove 103a-1 correspondingly has a T-shaped cross-section.

When the micro-perforated cavity 102 is moved in place, the micro-perforated cavity 102 may be fixed to the clamping plate 103a by means of a fastener such as a bolt.

Further, according to the present application, the clamping plate 103a is provided with a limiting hole 103a-3, and the limiting hole 103a-3 can cooperate with the fastener to limit the sliding distance of the micro-perforated cavity 102. Specifically, multiple limiting holes 103a-3 are spaced apart along the sliding groove 103a-1, and the sliding distance of the micro-perforated cavity 102 is adjusted by providing fasteners in different limiting holes 103a-3.

It can be understood that the manner in which the micro-perforated cavity 102 and the clamping plate 103a are connected to each other is merely a specific embodiment of the present application, and in practice, the micro-perforated cavity 102 can be connected to the clamping plate 103a in other manners. For example, at least one of the micro-perforated cavity 102 and the clamping plate 103a defines an elongated hole or multiple connecting holes spaced apart from each other so as to be adjustably connected to the other of the micro-perforated cavity 102 and the clamping plate 103a by means of a fastener.

In order to adjust $S_i$, according to the present application, the clamping plate 103a can move in a direction close to or away from the adjacent clamping plate 103a so as to be adjustably connected to the side plate 104.

Further, according to the present application, one of the clamping plate 103a and the side plate 104 is provided with a guide rail, and the other of the clamping plate 103a and the side plate 104a is provided with a guide groove, and the guide rail is slidably connected to the guide groove.

Of course, at least one of the clamping plate 103a and the side plate 104 may define an elongated hole or multiple connecting holes spaced apart from each other so as to adjust the relative position of the clamping plate 103a and the side plate 104. In order to facilitate the connection, according to the present application, the clamping plate 103a is provided with a first flanging 103a-2, and the first flanging 103a-2 defines an elongated hole or multiple connecting holes spaced apart from each other, so as to realize the connection between the clamping plate 103a and the side plate 104.

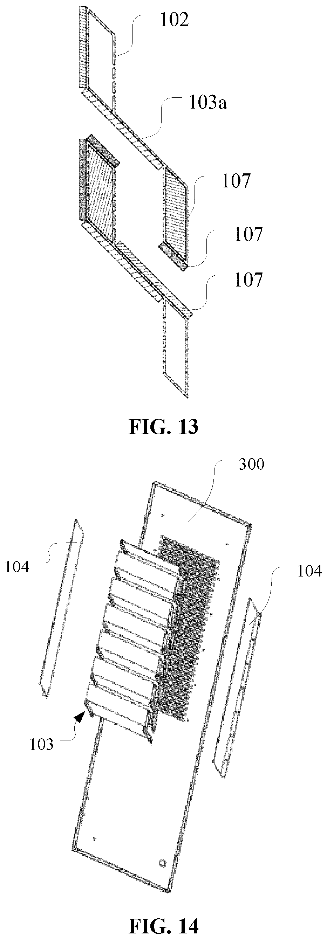

In some embodiments, the silencing air duct device 100 further includes a sound-absorbing material layer 107, as shown in FIG. 13, and it should be noted that the sound-absorbing material layer 107 is laid on an inner wall of the silencing air duct 101 and an inner wall of the micro-perforated cavity 102. It may be understood that, the surface of the micro-perforated cavity 102 having the communication hole 102a may or may not be laid with the sound-absorbing material layer 107. When the sound-absorbing material layer 107 is laid, the sound-absorbing material layer 107 does not block the communication hole 102a.

According to the present application, the inner wall of the silencing air duct 101 and the inner wall of the micro-perforated cavity 102 are respectively laid with the sound-absorbing material layer 107, so as to achieve noise reduction of the high-intermediate-frequency noise by means of the barrier property of the sound-absorbing material layer 107.

In some embodiments, there is a preset height difference between two ends of the silencing air duct 101, and the height difference is reasonably arranged so as to avoid external rainwater and the like from entering into the silencing air duct 101 and thus entering into the apparatus to be silenced, and causing damage to the apparatus to be silenced.

When the silencing air duct device 100 is installed at the air inlet of the apparatus to be silenced, the inlet of the silencing air duct 101 is lower in height than the outlet of the silencing air duct 101.

When the silencing air duct 101 is installed at the air outlet of the apparatus to be silenced, the outlet of the silencing air duct 101 is lower in height than the inlet of the silencing air duct 101.

In some embodiments, the side plate 104 is provided with a second flanging 104a that is connected to the apparatus to be silenced, which facilitates the connection between the whole silencing air duct device 100 and the apparatus to be silenced by means of the second flanging 104a.

A second aspect of the present application provides a charging pile, including a charging pile body, and the silencing air duct device 100 in any one of the above embodiments.

At least one of an air inlet and an air outlet of the charging pile body is provided with the silencing air duct device 100.

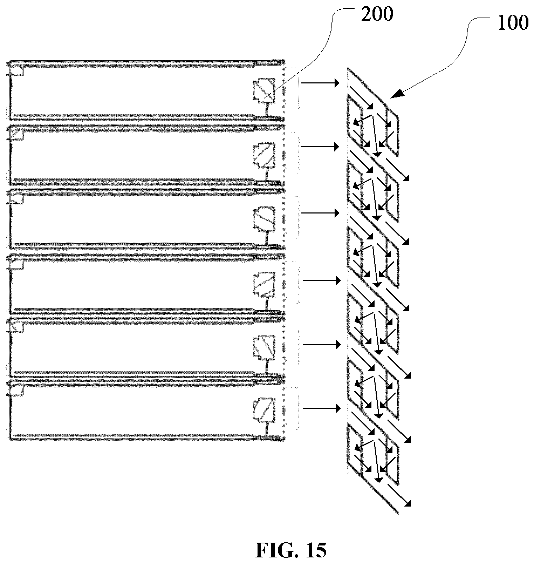

As shown in FIG. 14, the silencing air duct device 100 is installed in the charging pile body and is connected to a side door 300 of the charging pile body. The silencing channels in the silencing air duct device 100 and fan modules 200 in the charging pile body have the same number and are provided in one-to-one correspondence, and the gas flow direction is shown by the arrows in FIG. 15.

Since the charging pile according to the present application includes the silencing air duct device 100 described in any one of the above embodiments, all of the beneficial effects of the silencing air duct device 100 are included in that of the charging pile disclosed in the present application.

The embodiments in this specification are described in a progressive manner, and each embodiment focuses on the difference from other embodiments. Same or similar parts in various embodiments may refer to each other.

Based on the above description of the disclosed embodiments, those skilled in the art can implement or utilize the present application. Various modifications to these embodiments will be apparent to those skilled in the art. The general principles defined herein may be implemented in other embodiments without departing from the spirit or scope of the present application. Thus, the present application will not be limited to the embodiments shown herein, but should be conformed to the widest scope consistent with the principles and novel features disclosed herein.

In the description of this specification, the description with reference to the terms "an embodiment", "example", "specific example", etc. is intended to mean that specific features, structures, materials or characteristics described in conjunction with this embodiment or example are included in at least another embodiment or example of the present application. In this specification, the schematic expressions of the above terms do not necessarily refer to the same embodiment or example. Furthermore, the particular features, structures, materials, or characteristics may be combined in any one or more of the embodiments or examples in any suitable manner.

The above preferred embodiments disclosed in the present application are only intended to help explain the present application. The preferred embodiments do not describe all the details in detail, and are not intended to limit the specific embodiments of the present application. Obviously, many modifications and variations can be made based on the content of the present application. The embodiments are selected and described in detail in order to better explain the principles and practical applications of the present application, so that those skilled in the art can well understand and utilize the present application. The present application is limited only by the claims and the full scope and equivalents thereof.

**Claims**

1. A silencing air duct device (100) for noise reduction of an apparatus to be silenced, wherein the silencing air duct device (100) is separately provided with a silencing air duct (101) and a micro-perforated cavity (102);

   two ends of the silencing air duct (101) are open, wherein one end of the silencing air duct (101) is configured for communicating with external air, and the other end of the silencing air duct (101) is configured for communicating with an air inlet or an air outlet of the apparatus to be silenced;
   the micro-perforated cavity (102) is provided on a gas flow path of the silencing air duct (101), and is communicated with the silencing air duct (101) by means of a communication hole (102a) provided in the micro-perforated cavity (102).

2. The silencing air duct device (100) according to claim 1, wherein there is at least one micro-perforated cavity (102), which is located in the silencing air duct (101) so as to separate the silencing air duct (101) into at least two sections with different cross-sections.

3. The silencing air duct device (100) according to claim 1, comprising a clamping plate assembly (103) and side plates (104);
   the clamping plate assembly (103) at least comprises two clamping plates (103a), and adjacent clamping plates (103a) are spaced apart by a preset distance, and the side plates (104) seal and fix to two sides of the clamping plate assembly (103) respectively so as to cooperate with the clamping plates (103a) to form the at least one silencing air duct (101).

4. The silencing air duct device (100) according to claim 3, wherein the at least one micro-perforated cavity (102) is provided on a surface of at least one of the adjacent clamping plates (103a) facing the opposite clamping plate, so as to separate the silencing air duct (101) into at least two sections with different cross-sections;
   when two or more micro-perforated cavities (102) are provided, the micro-perforated structures are provided and spaced apart along a gas flow direction in the silencing air duct (101).

5. The silencing air duct device (100) according to claim 3, wherein at least one micro-perforated cavity (102) is alternately provided and spaced apart on the surface of each of the two adjacent clamping plates (103a) facing the opposite clamping plate;

   a first air duct (101a) of the silencing air duct (101) is formed between the adjacent micro-perforated cavities (102), and a second air duct (101b) of the silencing air duct (101) is formed between the micro-perforated cavity (102) and the opposite clamping plate (103a); the first air duct (101a) is communicated with the second air duct (101b), and the first air duct (101a) has a cross-section different from that of the second air duct (101b) so as to form an expansion cavity air duct;
   the communication hole (102a) passes through a side wall of the micro-perforated cavity (102) forming the first air duct (101a); or alternatively, the communication hole (102a) passes through a side wall of the micro-perforated cavity (102) forming the second air duct (101b).

6. The silencing air duct device (100) according to claim 5, wherein the micro-perforated cavity (102) is adjustably installed on the clamping plate (103a) in a direction from an inlet to an outlet of the silencing air duct (101).

7. The silencing air duct device (100) according to claim 6, wherein one of the micro-perforated cavity (102) and the clamping plate (103a) is provided with a sliding rail (102b), and the other of the micro-perforated cavity (102) and the clamping plate (103a) is provided with a sliding groove (103a-1) in sliding fit with the sliding rail (102b); or
   at least one of the micro-perforated cavity (102) and the clamping plate (103a) defines an elongated hole or a plurality of connecting holes which are spaced apart, so as to be adjustably connected to the other of the micro-perforated cavity (102) and the clamping plate (103a) by means of a fastener.

8. The silencing air duct device (100) according to claim 3, wherein the clamping plate (103a) is adjustably connected to the side plate (104) by moving in a direction close to or away from the adjacent clamping plate (103a).

9. The silencing air duct device (100) according to claim 8, wherein one of the clamping plate (103a) and the side plate (104) is provided with a guide rail, and the other of the clamping plate (103a) and the side plate (104) is provided with a guide groove for the guide rail to slidably move; or

at least one of the clamping plate (103a) and the side plate (104) is provided with an elongated hole or a plurality of connecting holes which are spaced apart, so as to adjust a relative position of the clamping plate (103a) and the side plate (104).

10. The silencing air duct device (100) according to claim 1, wherein a plurality of communication holes (102a) are provided in the micro-perforated cavity (102);
the silencing air duct device (100) further comprises a plug (105), which detachably seals the communication hole (102a).

11. The silencing air duct device (100) according to claim 10, wherein at least two plugs (105) are provided, and adjacent plugs (105) are connected to each other by means of a connecting strip (106).

12. The silencing air duct device (100) according to claim 1, further comprising a sound-absorbing material layer (107), which is laid on an inner wall of the silencing air duct (101) and an inner wall of the micro-perforated cavity (102).

13. The silencing air duct device (100) according to any one of claims 1 to 12, wherein a preset height difference is present between the two ends of the silencing air duct (101);

when the silencing air duct device (100) is installed at the air inlet of the apparatus to be silenced, the inlet of the silencing air duct (101) is lower in height than the outlet of the silencing air duct (101); or
when the silencing air duct (101) is installed at the air outlet of the apparatus to be silenced, the outlet of the silencing air duct (101) is lower in height than the inlet of the silencing air duct (101).

14. The silencing air duct device (100) according to any one of claims 3 to 9, wherein two ends of the micro-perforated cavity (102) are open and are sealed by the side plates (104); and/or

the clamping plate (103a) is provided with a first flanging (103a-2) which is connected to the side plate (104); and/or
the side plate (104) is provided with a second flanging (104a) which is connected to the apparatus to be silenced.

15. A charging pile, comprising a charging pile body and the silencing air duct device (100) according to any one of claims 1 to 14;
at least one of an air inlet and an air outlet of the charging pile body is provided with the silencing air duct device (100).

100

103a

104

104a

102

101

**FIG. 1**

FIG. 2

**FIG. 3**

**FIG. 4**

**FIG. 5**

106

105

**FIG. 6**

103a

103a-2

102

102a

**FIG. 7**

102

103a

102a

102

**FIG. 8**

**FIG. 9**

**FIG. 10**

**FIG. 11**

**FIG. 12**

**FIG. 13**

**FIG. 14**

**FIG. 15**

## INTERNATIONAL SEARCH REPORT

| International application No. |
| --- |
| **PCT/CN2022/144045** |

| **A.** | **CLASSIFICATION OF SUBJECT MATTER** |
| --- | --- |

B60L53/31(2019.01)i; B60L53/302(2019.01)i; F04D29/66(2006.01)i; E04B1/82(2006.01)i

According to International Patent Classification (IPC) or to both national classification and IPC

| **B.** | **FIELDS SEARCHED** |
| --- | --- |

Minimum documentation searched (classification system followed by classification symbols)

IPC: B60L,F04D,E04B,H05K

Documentation searched other than minimum documentation to the extent that such documents are included in the fields searched

Electronic data base consulted during the international search (name of data base and, where practicable, search terms used)

CNKI, CNTXT, VEN, ENTXTC: 微穿孔, 充电桩, 调节, 调整, 堵, 封, 降噪, 频率, 消声, 消音, 风道, silencing, noise, elimination, air, duct, charging, frequency, adjust, block , micro-perforated, reduce

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 109505808 A (GUANGDONG MIDEA WHITE HOUSEHOLD APPLIANCE TECHNOLOGY INNOVATION CENTER CO., LTD. et al.) 22 March 2019 (2019-03-22) description, paragraphs 0003-0055, and figures 1-4 | 1-5, 10-15 |
| Y | CN 109505808 A (GUANGDONG MIDEA WHITE HOUSEHOLD APPLIANCE TECHNOLOGY INNOVATION CENTER CO., LTD. et al.) 22 March 2019 (2019-03-22) description, paragraphs 0003-0055, and figures 1-4 | 6-9 |
| X | CN 210658083 U (SUPREME NAP ACOUSTICS (HUIZHOU) LTD.) 02 June 2020 (2020-06-02) description, paragraphs 0003-0040, and figures 1-3 | 1-5, 10-15 |
| Y | CN 210658083 U (SUPREME NAP ACOUSTICS (HUIZHOU) LTD.) 02 June 2020 (2020-06-02) description, paragraphs 0003-0040, and figures 1-3 | 6-9 |
| Y | CN 205177403 U (CHINA ELECTRIC POWER RESEARCH INSTITUTE STATE GRID CORP. CHINA et al.) 20 April 2016 (2016-04-20) description, paragraphs 0005-0057, and figure 1 | 6-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 June 2023** | **01 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/144045**

### C.    DOCUMENTS CONSIDERED TO BE RELEVANT

| Category* | Citation of document, with indication, where appropriate, of the relevant passages | Relevant to claim No. |
|---|---|---|
| A | CN 112757943 A (ZISEN ENVIRONMENTAL TECHNOLOGY CO., LTD.) 07 May 2021 (2021-05-07)<br>    entire document | 1-15 |
| A | CN 112804843 A (GUOCHUANG MOBILE ENERGY INNOVATION CENTER (JIANGSU) CO., LTD.) 14 May 2021 (2021-05-14)<br>    entire document | 1-15 |
| A | CN 113752880 A (SUNGROW POWER SUPPLY CO., LTD.) 07 December 2021 (2021-12-07)<br>    entire document | 1-15 |
| A | EP 1842977 A1 (TOGNACCINI, VINCENZO) 10 October 2007 (2007-10-10)<br>    entire document | 1-15 |

Form PCT/ISA/210 (second sheet) (July 2022)

**INTERNATIONAL SEARCH REPORT**
Information on patent family members

| International application No. |
| --- |
| **PCT/CN2022/144045** |

| Patent document cited in search report | | | Publication date (day/month/year) | Patent family member(s) | | | Publication date (day/month/year) |
| --- | --- | --- | --- | --- | --- | --- | --- |
| CN | 109505808 | A | 22 March 2019 | None | | | |
| CN | 210658083 | U | 02 June 2020 | None | | | |
| CN | 205177403 | U | 20 April 2016 | None | | | |
| CN | 112757943 | A | 07 May 2021 | None | | | |
| CN | 112804843 | A | 14 May 2021 | None | | | |
| CN | 113752880 | A | 07 December 2021 | None | | | |
| EP | 1842977 | A1 | 10 October 2007 | ITPG | 20060027 | A1 | 04 October 2007 |

Form PCT/ISA/210 (patent family annex) (July 2022)

**EP 4 617 108 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211391928